# EUROPÄISCHE PATENTANMELDUNG

(11) **EP 3 812 100 A1**
(43) Veröffentlichungstag der Anmeldung: **28.04.2021**
(21) Anmeldenummer: 20202447.7
(22) Anmeldetag: 16.10.2020
(51) Int. Cl.: B25F 5/02, B24B 55/10, B24B 23/04

(54) **ELEKTROHANDWERKZEUGMASCHINE**

(30) Priorität: 21.10.2019 DE 202019105846 U
(71) Anmelder: C. & E. Fein GmbH, 73529 Schwäbisch Gmünd-Bargau (DE)
(72) Erfinder: Mann, Rainer, 73529 Schwäbisch Gmünd-Bargau (DE)

(57) **Zusammenfassung**

Die Erfindung betrifft eine Elektrohandwerkzeugmaschine (1), insbesondere eine oszillierend antreibbare Elektrohandwerkzeugmaschine (1), mit einem Gehäuse (2) und einem in dem Gehäuse (2) angeordneten Antrieb zum Antreiben einer Werkzeugaufnahme (3), die an einer mit dem Antrieb gekoppelten Werkzeugwelle angeordnet ist und an der ein Werkzeug (4) lösbar montierbar ist, wobei die Werkzeugwelle in einer Abtriebseinheit (20) aufgenommen ist, die einen vorzugsweise in einem Getriebekopfgehäuse (6) aufgenommenen Getriebekopf (5) umfasst. An der Abtriebseinheit (20) ist ein Spannhals (7) ausgebildet, der derartig gestaltet ist, dass eine werkzeuglose Aufnahme eines Zubehörteils (8) in einer Montagerichtung ermöglicht ist, die parallel zu einer Längsachse (9) des Getriebekopfes (5) orientiert ist.

## Beschreibung

Die Erfindung betrifft eine Elektrohandwerkzeugmaschine, insbesondere eine oszillierend antreibbare Elektrohandwerkzeugmaschine, mit einem Gehäuse und einem in dem Gehäuse angeordneten Antrieb zum Antreiben einer Werkzeugaufnahme, die an einer mit dem Antrieb gekoppelten Werkzeugwelle angeordnet ist und an der ein Werkzeug lösbar montierbar ist, wobei die Werkzeugwelle in einer Abtriebseinheit aufgenommen ist, die einen vorzugsweise in einem Getriebekopfgehäuse aufgenommenen Getriebekopf umfasst.

Derartige Elektrohandwerkzeugmaschinen, die oszillierend angetrieben werden, bei denen also eine durch einen elektrischen Antrieb erzeugte Rotation der Antriebswelle in eine oszillierende Bewegung der mit der Werkzeugwelle verbundenen Werkzeugaufnahme überführt wird, werden häufig auch als oszillierende Multifunktionswerkzeuge (OMT) bezeichnet. Hierbei sei auch darauf hingewiesen, dass bei OMT-Maschinen die Werkzeugwelle üblicherweise senkrecht zu dem Antrieb orientiert ist. An dieser Werkzeugaufnahme der Elektrohandwerkzeugmaschinen lassen sich unterschiedlichste Werkzeuge befestigen, mit denen Werkstücke, vor allem solche aus Holz, bearbeitet werden können, weshalb diese vielseitig einsetzbar sind und sich daher großer Beliebtheit erfreuen.

Es hat sich dabei die Notwendigkeit gezeigt, dass dem Nutzer die Möglichkeit gegeben werden soll, neben dem Werkzeug auch weitere Zubehörteile an der Elektrohandwerkzeugmaschine befestigen zu können. So sind insbesondere bei der Verwendung von Schleifplatten und Sägeblättern die hierdurch entstehenden Stäube und Späne für den Nutzer äußerst nachteilig. Zum einen können diese die Sicht auf den Arbeitsbereich behindern, was sich nachteilig auf das Arbeitsergebnis auswirken kann, zum anderen besteht aber auch das Problem, dass diese Stäube und Späne vom Nutzer eingeatmet werden oder in dessen Augen gelangen, was sich dann wiederum nachteilig auf die Gesundheit des Nutzers auswirkt. Daher werden für derartige Arbeiten häufig Absaugungsvorrichtungen als Zubehörteile verwendet, die die bei der Bearbeitung des Werkstückes entstehenden Stäube und Späne absaugen und damit von dem Nutzer und dem Arbeitsbereich fernhalten. Darüber hinaus hat es sich aber auch häufig als sinnvoll erwiesen, wenn beim Sägen ein Tiefenanschlag verwendet wird, durch den es möglich ist, die Eindringtiefe des Sägeblatts in das Werkstück zu begrenzen.

Unter der Bezeichnung Abtriebseinheit wird dabei im Rahmen der Erfindung letztlich der Teil der Elektrohandwerkzeugmaschinen verstanden, in dem oder an dem die Wesentlichen oszillierenden Bauteile der Maschine aufgenommen oder angeordnet sind, also insbesondere die Werkzeugwelle und die Werkzeugaufnahme, an der das Werkzeug befestigt wird.

Der Getriebekopf, der üblicherweise aus Metall gefertigt wird, beherbergt die Werkzeugwelle, die oszillierend angetrieben wird, und das Getriebekopfgehäuse, das häufig aus Kunststoff gefertigt wird, umgibt den Getriebekopf zumindest teilweise. Es sind aber auch Getriebeköpfe denkbar, die ohne zusätzliches Getriebekopfgehäuse ausgebildet sind.

Bei oszillierend angetriebenen Elektrohandwerkzeugmaschinen, die eine moderne Werkzeugaufnahme aufweisen, wie beispielsweise in der EP 3027367 A1 offenbart, kann der Werkzeugwechsel sehr schnell erfolgen. Ein Problem bei den aus dem Stand der Technik bekannten Zubehörteilen ist jedoch die Befestigung des Zubehörteils an der Elektrohandwerkzeugmaschine. So ist aus der DE 10 2016 110 214 A1, die aus dem Hause der Anmelderin stammt, beispielsweise ein Tischhalter bekannt, der an dem Getriebekopf angeschraubt wird, der hierfür entsprechende Gewindebohrungen aufweist. Dies hat sich zwar bewährt und die Gewindebohrungen können insbesondere auch für die Befestigung weiterer Zubehörteile verwendet werden. Allerdings müssen für den Wechsel des jeweiligen Zubehörteils zunächst stets die verwendeten Schrauben gelöst und nach dem Wechsel des Zubehörteils wieder befestigt werden.

Der Erfindung liegt daher die Aufgabe zugrunde, die oben genannten Nachteile zu reduzieren und eine Elektrohandwerkzeugmaschine bereitzustellen, die ein vereinfachtes Wechseln der Zubehörteile ermöglicht.

Diese Aufgabe wird gemäß der Erfindung bei einer Elektrohandwerkzeugmaschine der eingangs genannten Art dadurch gelöst, dass an der Abtriebseinheit ein Spannhals ausgebildet ist, der derartig gestaltet ist, dass eine werkzeuglose Aufnahme eines Zubehörteils in einer Montagerichtung ermöglicht ist, die parallel zu einer Längsachse des Getriebekopfes orientiert ist.

Hierdurch wird sichergestellt, dass ein Zubehörteil möglichst einfach auf den Spannhals aufgesetzt werden kann, nämlich in gleicher Richtung wie das Werkzeug.

Als günstig hat es sich auch erwiesen, wenn der Spannhals dem Getriebekopf oder dem Getriebekopfgehäuse zugeordnet ist. Hierdurch lässt sich das Zubehörteil besonders sicher an der Abtriebseinheit befestigen, da hierbei die Befestigung an einem strukturell sicheren Bauteil erfolgt. Im Rahmen der Erfindung ist es aber auch vorgesehen, dass das Zubehörteil dem Getriebekopf und dem Getriebekopfgehäuse zugeordnet ist.

Bewährt hat es sich hierbei auch, wenn der Spannhals einstückig mit dem Getriebekopf oder dem Getriebekopfgehäuse ausgebildet ist. Hierdurch reduziert sich der Montageaufwand deutlich und es lassen sich damit auch die Herstellungskosten senken.

Als besonders vorteilhaft hat es sich auch erwiesen, wenn der Spannhals einen zylindrischen Querschnitt aufweist. Durch den zylindrischen Querschnitt können die Zubehörteile drehbar an dem Spannhals gelagert werden. Dies ist wichtig, da die Werkzeuge, die bei der Elektrohandwerkzeugmaschine verwendet werden, ebenfalls in unterschiedlichen Winkelstellungen an der Werkzeugaufnahme befestigt werden können.

Als günstig hat es sich auch gezeigt, wenn der Spannhals an seinem der Werkzeugaufnahme zuweisenden Ende durch einen Kragen begrenzt ist. Hierdurch wird die Gefahr reduziert, dass das auf den Spannhals aufgesetzte Zubehörteil axial in Richtung der Werkzeugaufnahme rutschen kann. Anderenfalls bestünde die Gefahr, dass das Zubehörteil in Kontakt mit einem in der Werkzeugaufnahme aufgenommenen Werkzeug kommt, was dieses beschädigen könnte.

Als besonders günstig hat es sich zudem erwiesen, wenn an dem Kragen mindestens eine Aussparung zur Bildung einer Kodierung ausgebildet ist. Hierdurch ist es dann letztlich möglich, das Zubehörteil nur in einer Stellung auf den Spannhals aufzusetzen, was die Betriebssicherheit weiter erhöht.

Als vorteilhaft hat es sich außerdem auch gezeigt, wenn die mindestens eine Aussparung mehrfach vorgesehen ist. Durch die Anzahl der Aussparungen lässt sich die mechanische Stabilität der Verbindung des Zubehörteils an dem Spannhals verbessern, wobei es sich in diesem Zusammenhang besonders bewährt hat, wenn die Anzahl der Aussparungen vorzugsweise 2 oder mehr, bevorzugt größer 4 oder mehr und besonders bevorzugt größer 6 oder mehr, und weiter vorzugsweise 14 oder weniger, bevorzugt 12 oder weniger und besonders bevorzugt 10 oder weniger, und ganz besonders bevorzugt 8 beträgt. Würde die Anzahl der Aussparungen zu groß, dann würde sich dies nachteilig auf die mechanische Stabilität des Kragens auswirken.

Als günstig hat es sich zudem erwiesen, wenn der Winkelbereich der Summe der Aussparungen zwischen 40° und 90° liegt und besonders bevorzugt 60° beträgt. Hierdurch wird noch ausreichend Stabilität des Kragens gewährleistet und gleichzeitig sichergestellt, dass ein Zubehörteil sicher an dem Spannhals aufgenommen werden kann.

Aus fertigungstechnischen Gründen hat es sich als vorteilhaft erwiesen, wenn die Kodierung spiegelsymmetrisch zu einer Spiegelebene verläuft, die durch die Gehäuselängsachse des Gehäuses und die Längsachse des Getriebekopfes aufgespannt wird. Hierbei hat es sich dann auch bewährt, wenn mindestens eine der Aussparungen von der Spiegelebene geschnitten wird.

Für die Betriebssicherheit hat es sich weiterhin auch als vorteilhaft erwiesen, wenn die durch die mindestens eine Aussparung gebildete Kodierung so gestaltet ist, dass ein Aufsetzen eines Zubehörteils nur in einer Position erfolgen kann, die üblicherweise nicht für den Einsatz des Zubehörteils verwendet wird. Hierdurch wird dann erreicht, dass eine unbeabsichtigte Lösung des Zubehörteils verhindert wird, die nachteilig für die Betriebssicherheit wäre. Dies ist üblicherweise dann der Fall, wenn bei der Montage des Zubehörteils an dem Spannhals zwischen dem Zubehörteil und der Gehäuselängsachse ein Winkel zwischen 10° und 50° besteht.

Für die Sicherheit hat es sich zudem als vorteilhaft erwiesen, wenn das von der Werkzeugaufnahme wegweisende Ende des Spannhalses durch einen Ringbund begrenzt ist. Durch die Begrenzung wird die axiale Endlage des Zubehörteils festgelegt und dadurch zudem sichergestellt, dass sich dieses in montiertem Zustand nur begrenzt bewegen kann.

Als günstig hat es sich auch erwiesen, wenn in dem Spannhals Rastsitze ausgebildet sind. Hierdurch ist es möglich, die Zubehörteile mit einer Verriegelungsvorrichtung in den Rastsitzen bezüglich ihrer Drehlage zu sichern. Hierbei hat es sich besonders bewährt, wenn die Rastsitze in dem den Spannhals begrenzenden Ringbund ausgebildet sind. Auch hat es sich als günstig gezeigt, wenn benachbarte Rastsitze einen Winkel von 30° zueinander aufweisen. Hierbei sei noch einmal explizit darauf hingewiesen, dass die den Spannhals begrenzende Ringschulter und der Kragen, in dem die die Kodierung bildenden Aussparungen ausgebildet sind, Teil des Spannhalses sind.

Als günstig hat es sich auch erwiesen, wenn dem Spannhals ein Hilfsring frei drehbar und axial unverschiebbar zugeordnet ist, mit dem ein Zubehörteil drehfest verbindbar ist. Damit wird letztlich eine alternative oder ergänzende Befestigungsmöglichkeit des Zubehörteils bereitgestellt, bei der es dem Nutzer möglich ist, dieses weiter zu verdrehen, als es bei der Befestigung durch die Kodierung möglich wäre. In diesem Zusammenhang hat es sich dabei auch bewährt, wenn der Hilfsring eine radiale Öffnung aufweist. Hierdurch ist es dem Nutzer möglich, diesen leicht aufzuweiten und über den Kragen auf den Spannhals aufzusetzen. Auch hier erfolgt die Montage des Zubehörteils an dem Spannhals parallel zu der Längsachse des Getriebekopfes - also parallel zu der Werkzeugwelle.

Für die Montage des Zubehörteils hat es sich dabei als günstig erwiesen, wenn dem Hilfsring an dessen der Werkzeugaufnahme zuweisenden Ende mindestens ein Radialvorsprung zugeordnet ist. Diese können mit Verriegelungskulissen wechselwirken, die an dem Zubehörteil ausgebildet sind, wodurch sich dieses an dem Hilfsring sichern lässt. Hierbei haben sich insbesondere sechs Radialvorsprünge als besonders günstig erwiesen. Alternativ ist es im Rahmen der Erfindung aber auch vorgesehen, dass dem Hilfsring mindestens eine Rastnase zugeordnet ist. Diese Rastnase kann dann in eine korrespondierende Rastöffnung eingreifen, die an der Absaugungsvorrichtung ausgebildet ist. Im Rahmen der Erfindung ist es hierbei aber auch vorgesehen, dass die Rastöffnung an dem Hilfsring und die Rastnase an der Absaugungsvorrichtung ausgebildet ist.

Um ein Verkippen eines auf dem Hilfsring montierten Zubehörteils zu verhindern, hat es sich als vorteilhaft gezeigt, wenn dem Hilfsring an dessen der Werkzeugaufnahme wegweisenden Ende eine Ringschulter zugeordnet ist. In diesem Zusammenhang hat es sich dann weiterhin bewährt, wenn die Ringschulter den Ringbund zumindest teilweise überdeckt. Hierdurch wird eine zusätzliche Führung bereitgestellt.

Gegenstand der Erfindung ist außerdem eine Kombination aus einer Elektrohandwerkzeugmaschine nach einem der Ansprüche 1 bis 19 und einem Zubehörteil, das an dem Spannhals des Getriebekopfgehäuses lösbar aufgenommen ist, wobei das Zubehörteil einen hohlzylindrischen Befestigungsabschnitt aufweist, der mit dem Spannhals koppelbar ist. Unter hohlzylindrisch ist hierbei im Rahmen der Erfindung insbesondere auch ringförmig zu verstehen.

Für die Befestigung des Zubehörteils mit der Elektrohandwerkmaschine hat es sich weiterhin auch bewährt, wenn auf der Innenseite des hohlzylindrischen Befestigungsabschnitts eine Mehrzahl von Vorsprüngen zur Wechselwirkung mit den Aussparungen des Spannhalses, eine Mehrzahl von Verriegelungskulissen zur Wechselwirkung mit den an dem Hilfsring ausgebildeten Radialvorsprüngen, oder Rastöffnungen zur Wechselwirkung mit den an dem Hilfsring ausgebildeten Rastnasen ausgebildet sind. Hierdurch lässt dich das Zubehörteil besonders einfach an dem Spannhals befestigen.

Im Rahmen der Erfindung ist es dabei besonders bevorzugt, wenn das Zubehörteil ausgewählt ist aus einer Gruppe, die eine Absaugungsvorrichtung, einen Tiefenanschlag und eine Tischhalterung umfasst.

Im Folgenden wird die Erfindung an einem in den Zeichnungen dargestellten Ausführungsbeispiel näher erläutert; es zeigen:
- Fig. 1: eine perspektivische Ansicht einer Elektrohandwerkzeugmaschine,
- Fig. 2: eine Draufsicht von unten auf die Elektrohandwerkzeugmaschine aus der Figur 1,
- Fig. 3: eine perspektivische Ansicht einer ersten Ausführungsform einer Absaugungsvorrichtung,
- Fig. 4: eine perspektivische Ansicht einer zweiten Ausführungsform einer Absaugungsvorrichtung,
- Fig. 5: eine perspektivische Ansicht einer dritten Ausführungsform einer Absaugungsvorrichtung,
- Fig. 6: eine perspektivische Ansicht einer vierten Ausführungsform einer Absaugungsvorrichtung,
- Fig. 7: eine Seitenansicht auf eine Elektrohandwerkzeugmaschine mit der montierten Absaugungsvorrichtung gemäß der vierten Ausführungsform aus der Figur 6,
- Fig. 8: eine perspektivische Ansicht einer ersten Ausführungsform eines Tiefenanschlags,
- Fig. 9: eine perspektivische Ansicht einer zweiten Ausführungsform eines Tiefenanschlags, und
- Fig. 10: eine perspektivische Ansicht der Absaugungsvorrichtung gemäß der ersten Ausführungsform aus der Figur 3, die an der Elektrohandwerkzeugmaschine befestig ist.

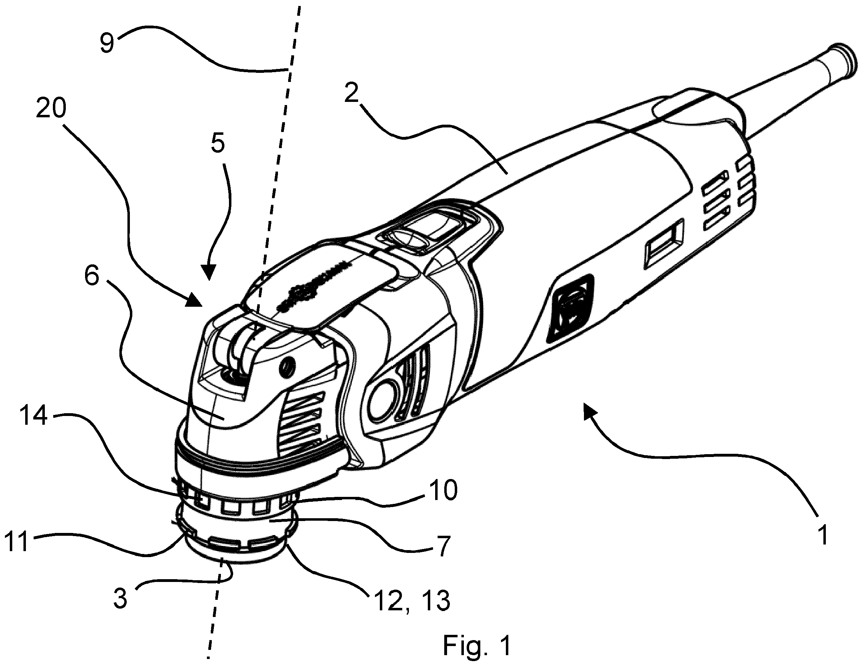

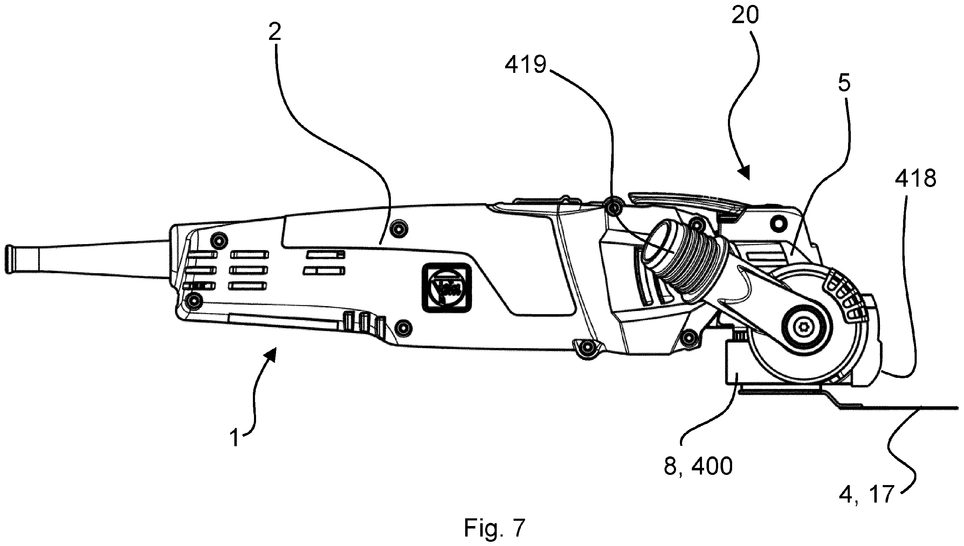

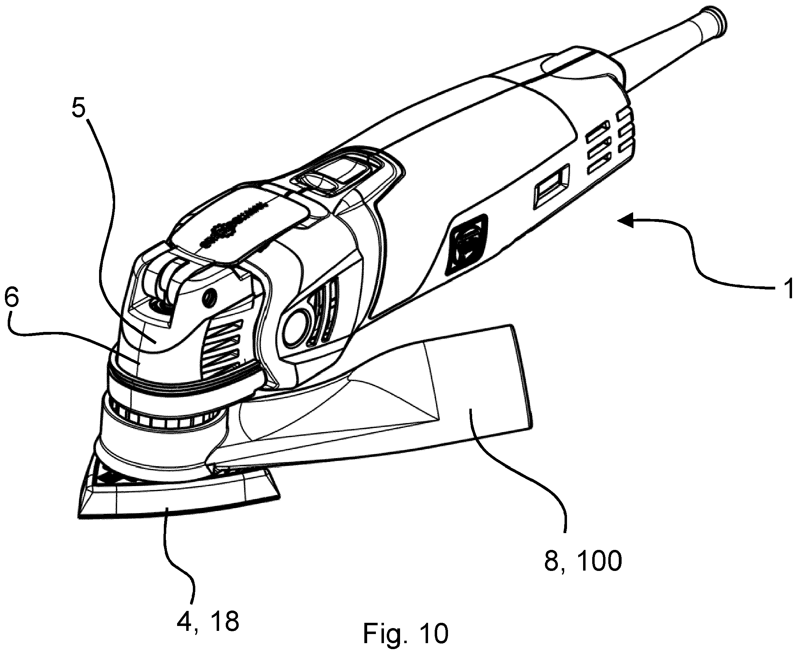

Figur 1 zeigt in einer perspektivischen Ansicht eine erfindungsgemäße Elektrohandwerkzeugmaschine 1, die oszillierend antreibbar ist. Diese weist ein Gehäuse 2 auf, in dem ein zeichnerisch nicht dargestellter Antrieb aufgenommen ist, mit dem über eine Werkzeugwelle eine Werkzeugaufnahme 3 oszillierend angetrieben werden kann. Der Antrieb und die Werkzeugwelle sind dabei senkrecht zueinander ausgerichtet. An der Werkzeugaufnahme 3 kann dabei ein Werkzeug 4 lösbar montiert werden, wie dies beispielshaft anhand der Figuren 7 und 10 erkennbar ist. Die Werkzeugwelle ist dabei in einem Getriebekopf 5 aufgenommen, der von einem Getriebekopfgehäuse 6 umgeben ist. Diese sind dabei Teil einer Abtriebseinheit 20. Das Getriebekopfgehäuse 6 ist dabei einstückig mit einem Spannhals 7 gebildet, der derartig gestaltet ist, dass eine werkzeuglose Aufnahme eines Zubehörteils 8 möglich ist und zwar in einer Montagerichtung, die parallel zu einer Längsachse 9 des Getriebekopfes 5 orientiert ist. Der Spannhals 7 ist dabei an seinem von der Werkzeugaufnahme 3 wegweisenden Ende durch einen Ringbund 10 und an seinem der Werkzeugaufnahme 3 zuweisenden Ende durch einen Kragen 11 begrenzt, wobei an diesem Kragen 11 mehrere Aussparungen 12 ausgebildet sind, wodurch eine Kodierung 13 geschaffen wird. Durch diese Kodierung 13 wird sichergestellt, dass das Zubehörteil 8 nur in einer bestimmten Position auf den Spannhals 7 aufgesetzt und von diesem wieder entfernt werden kann. Die Aussparungen 13 sind dabei so gestaltet, dass ein Aufsetzen eines Zubehörteils 8 nur in einer Position erfolgen kann, die üblicherweise nicht für den Einsatz des Zubehörteils 8 verwendet wird, um ein unbeabsichtigtes Lösen des Zubehörteils 8 zu verhindern. In dem gezeigten Ausführungsspiel sind insgesamt 8 Aussparungen 12 vorgesehen, wobei der Winkelbereich der Summe der Aussparungen 12 rund 60° beträgt. An der Ringschulter 10 sind zudem Rastsitze 14 ausgebildet, in die eine Verriegelungsvorrichtung 415, 515 eines Zubehörteils 8 eingreifen kann, um dessen Drehlage an dem Spannhals 7 festzulegen.

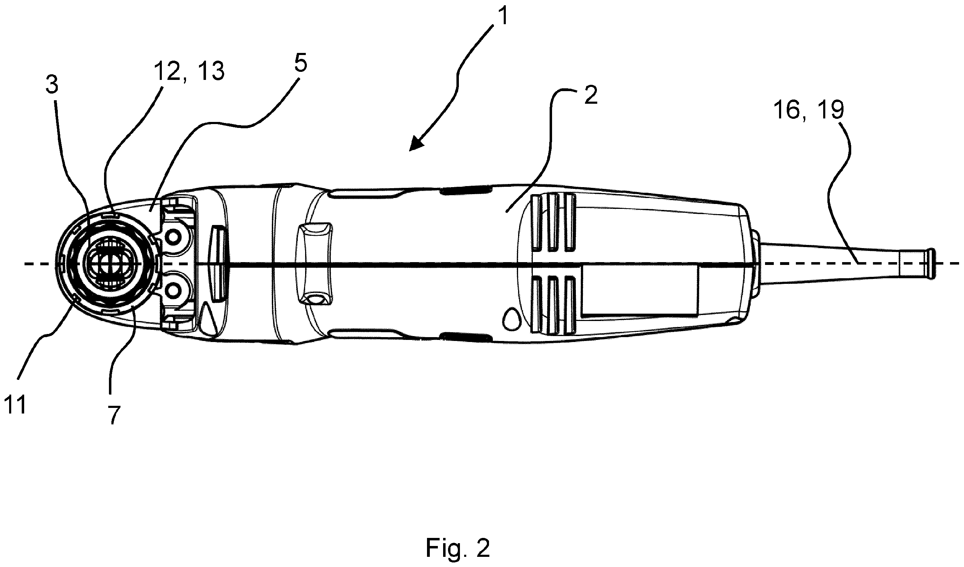

Der Unteransicht auf die Elektrohandwerkzeugmaschine 1, die in der Figur 2 dargestellt ist, ist neben der Werkzeugaufnahme 3 zu entnehmen, dass der Spannhals 7 einen zylindrischen Querschnitt aufweist. Zudem lässt sich dieser Abbildung auch entnehmen, dass die Aussparungen 13 spiegelsymmetrisch zu einer Spiegelebene 16 verlaufen, die durch eine Gehäuselängsachse 19 des Gehäuses 2 und die Längsachse 9 des Getriebekopfes 5 aufgespannt wird. Zudem wird hieraus auch deutlich, dass mindestens eine der Aussparungen 12 von der Spiegelebene 16 geschnitten wird. Die Aussparungen 12 sind dabei so angeordnet, dass ein Zubehörteil 8 nur in einem Winkel von rund 45° zur Gehäuselängsachse 19 auf den Spannhals 7 aufgesetzt werden kann.

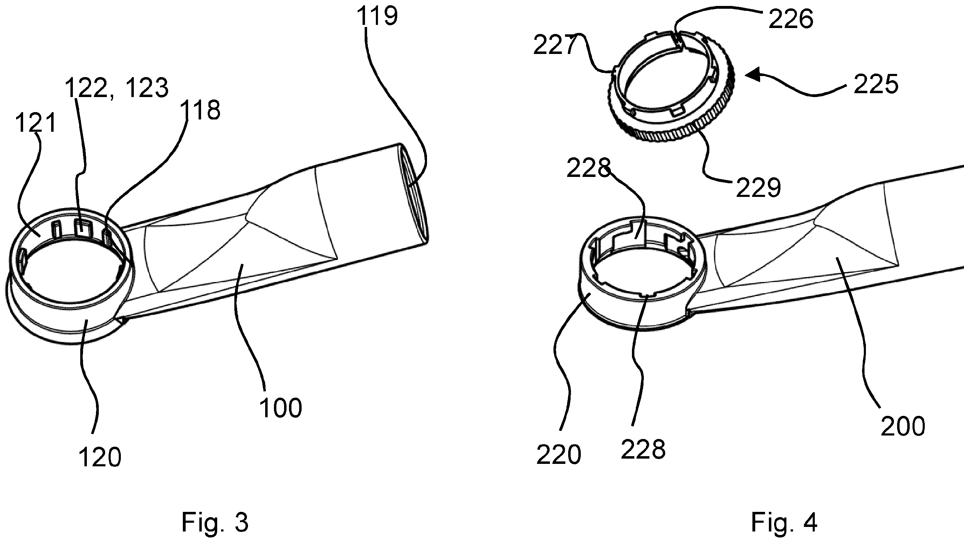

In der Figur 3 ist eine erste Ausführungsform einer Absaugungsvorrichtung 100 dargestellt, die ein Zubehörteil 8 bildet. Diese Absaugungsvorrichtung 100 weist neben einem Lufteinlass 118 und einem Luftauslass 119 einen hohlzylindrischen Befestigungsabschnitt 120 auf, in den der Lufteinlass 118 mündet. In der ersten Ausführungsform der Absaugungsvorrichtung 100 ist auf der Innenseite 121 des hohlzylindrischen Befestigungsabschnitts 120 ein Kodierungsbereich 122 ausgebildet, der der Montage der Absaugungsvorrichtung 100 an der Elektrohandwerkzeugmaschine 1 dient. Dieser Kodierungsbereich 122, der eine Reihe von Vorsprüngen 123 umfasst, führt dazu, dass die Absaugungsvorrichtung 100 nur in einer einzigen Stellung auf den Spannhals 7 der Elektrohandwerkzeugmaschine 1 aufgesetzt werden kann, nämlich nur dann, wenn die Vorsprünge 123 des Kodierungsbereichs 122 fluchtend mit den korrespondierenden Aussparungen 12 sind, die an dem Spannhals 7 der Elektrohandwerkzeugmaschine 1 ausgebildet sind.

In der Figur 4 ist neben der zweiten Ausführungsform der Absaugungsvorrichtung 200 auch ein Hilfsring 225 zu erkennen, der zwischen den Ringbund 10 und den Kragen 11 auf den Spannhals 7 frei drehbar aufgesetzt werden kann. Hierzu weist der Hilfsring 225 eine radiale Öffnung 226 auf, wodurch der Hilfsring 225 durch den Nutzer leicht aufgedehnt und über den Ringbund 10 hinweg auf den Spannhals 7 aufgesetzt werden kann. Um die Absaugungsvorrichtung 200 an dem Hilfsring 225 zu befestigen, sind an dem der Werkzeugaufnahme 3 zuweisenden Ende des Hilfsrings 225 außenumfangsseitig insgesamt 6 Radialvorsprünge 227 ausgebildet. In diese Radialvorsprünge 227 können Verriegelungskulissen 228 eingreifen, die an einem Befestigungsabschnitt 220 der Absaugungsvorrichtung 200 ausgebildet sind, um die Absaugung 224 drehfest mit dem Hilfsring 225 zu verbinden. Bei dem gezeigten Ausführungsbeispiel ist dem Hilfsring 225 an dessen der Werkzeugaufnahme 3 wegweisenden Ende eine Ringschulter 229 zugeordnet, die den den Spannhals 7 axial nach hinten begrenzenden Ringbund 10 zumindest teilweise überdeckt.

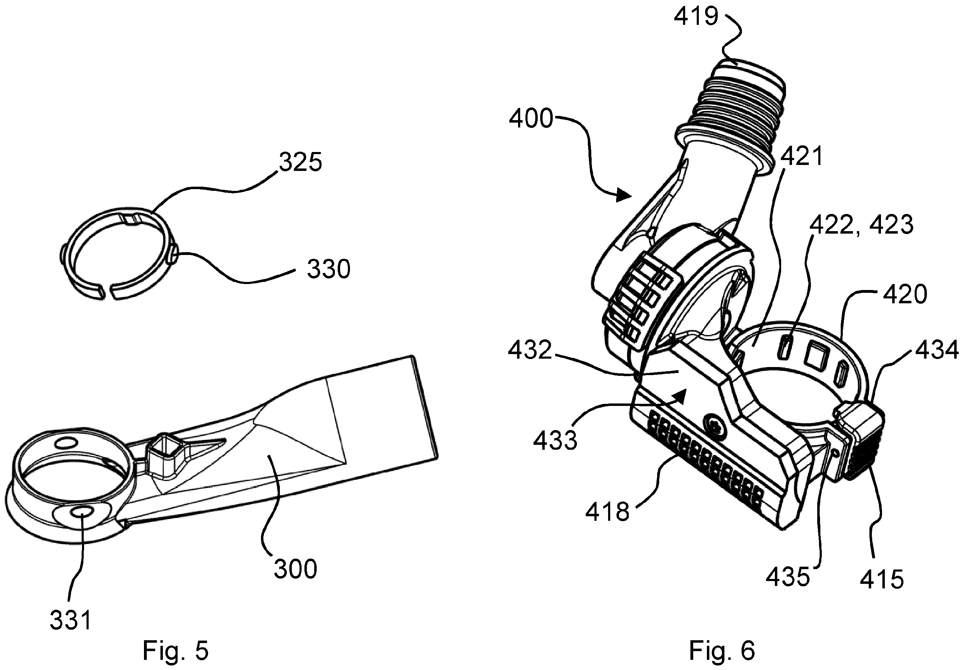

In der Figur 5 ist neben der dritten Ausführungsform der Absaugungsvorrichtung 300 ebenfalls ein Hilfsring 325 vorgesehen. Dieser weist dabei zwei Rastnasen 330 auf, die in Rastöffnungen 331 eingreifen, die in der Absaugung 324 ausgebildet sind, wenn die Absaugungsvorrichtung 300 auf den zuvor auf den Spannhals 7 befestigten Hilfsring 325 aufgesetzt wird.

Figur 6 zeigt ebenfalls in einer perspektivischen Ansicht eine vierte Ausführungsform der Absaugungsvorrichtung 400, die ein Zubehörteil 8 für eine oszillierend antreibbare Elektrohandwerkzeugmaschine 1 darstellt. Die Absaugungsvorrichtung 400 gemäß der vierten Ausführungsform weist dabei einen Grundkörper 432 auf, in dem ein Luftführungskanal 433 ausgebildet ist, der einenends durch einen Lufteinlass 418 und anderenends durch einen Luftauslass 419 begrenzt ist. An dem Grundkörper 432 ist zudem ein Befestigungsabschnitt 420 ausgebildet, mit dem die Absaugungsvorrichtung 400 an dem Spannhals 7 der Elektrohandwerkzeugmaschine 1 befestigt werden kann. Der Befestigungsabschnitt 420 ist auch hier im Wesentlichen hohlzylindrisch gebildet und weist auf seiner Innenseite 421 einen Kodierungsbereich 422 mit einer Reihe von Vorsprüngen 423 auf, die der Montage der Absaugungsvorrichtung 400 an dem Spannhals 7 der Elektrohandwerkzeugmaschine 1 dient. An dem Befestigungsabschnitt 420 ist in dem gezeigten Ausführungsbeispiel eine Verriegelungsvorrichtung 415 ausgebildet, mit der es dem Nutzer möglich ist, die Absaugungsvorrichtung 400 an den Rastsitzen 14 des Spannhalses 7 zu verriegeln, also insbesondere deren Drehstellung gegenüber dem Spannhals 7 festzulegen. Die Verriegelungsvorrichtung 415 ist dabei gegen die Kraft einer Rückstellfeder 434 schwenkbar um eine Schwenkachse 435 an dem Grundkörper 432 gelagert. Der Luftauslass 419 ist zudem an dem Grundkörper 432 begrenzt verdrehbar gelagert, um dem Nutzer weitere Verstellmöglichkeiten zu geben.

Figur 7 zeigt in einer Seitenansicht die Elektrohandwerkzeugmaschine 1 mit der daran befestigten vierten Ausführungsform der Absaugungsvorrichtung 400. An der Werkzeugaufnahme 3 ist dabei ein als Werkzeug 4 dienendes Sägeblatt 17 befestigt.

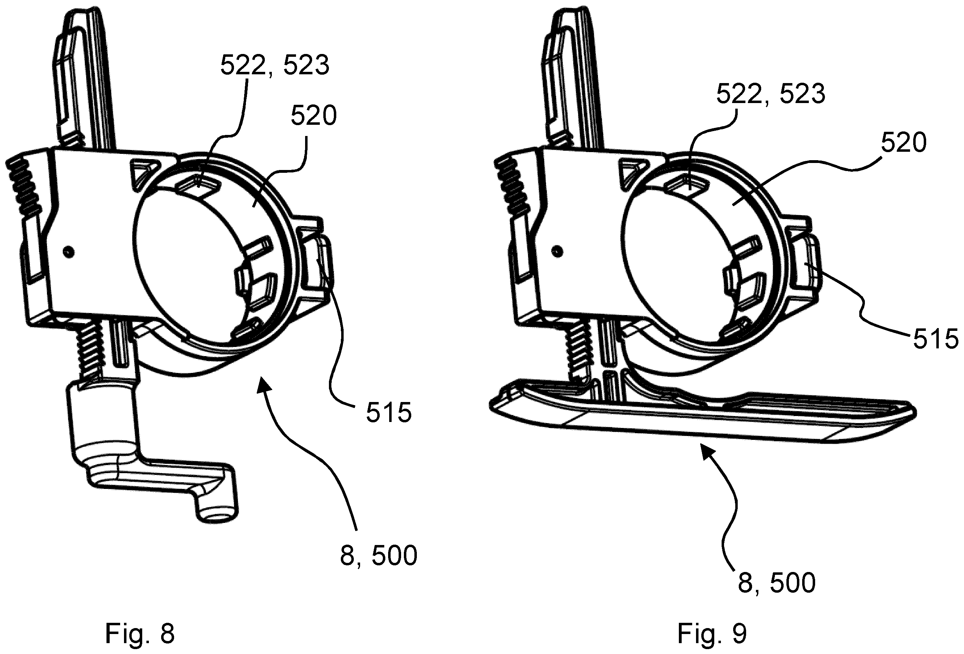

Die Figuren 8 und 9 zeigen zwei Tiefenanschläge 500, die ebenfalls als Zubehörteile 8 dienen. Beiden Tiefenanschlägen 500 ist gemein, dass diese jeweils einen Befestigungsabschnitt 520 aufweisen, an denen ebenfalls Vorsprünge 523 ausgebildet sind, die einen Kodierungsbereich 522 bilden und mit denen die Tiefenanschläge 500 über die Kodierung 13 an dem Spannhals 7 der Elektrohandwerkzeugmaschine 1 befestigt werden können. Der Tiefenanschlag 500, der in der Figur 8 dargestellt ist, wird dabei üblicherweise in Kombination mit einem als Tauchsägeblatt gebildeten Sägeblatt 17 verwendet, während der in der Figur 9 dargestellte Tiefenanschlag 500 bei einem kreissägeartigen Sägeblatt 17 verwendet wird. Beide Tiefenanschläge 500 weisen jeweils eine Verriegelungsvorrichtung 515 auf, mit denen deren Drehlage an dem Spannhals 7 festgelegt werden kann.

Bei der in der Figur 10 dargestellten Elektrohandwerkzeugmaschine 1 ist das Zubehörteil 8, das als Absaugungsvorrichtung 100 gebildet ist, über die Kodierung 13 und den korrespondierenden Kodierungsbereich 122 an dem Spannhals 7 befestigt, und dient dazu, die bei dem Einsatz des Werkzeugs 4, das in dem gezeigten Ausführungsbeispiel als eine Schleifplatte 18 gebildet ist, entstehenden Stäube und Späne abzusaugen.

### Bezugszeichenliste

- 1: Elektrohandwerkzeugmaschine
- 2: Gehäuse
- 3: Werkzeugaufnahme
- 4: Werkzeug
- 5: Getriebekopf
- 6: Getriebekopfgehäuse
- 7: Spannhals
- 8: Zubehörteil
- 9: Längsachse
- 10: Ringbund
- 11: Kragen
- 12: Aussparung
- 13: Kodierung
- 14: Rastsitze
- 16: Spiegelebene
- 17: Sägeblatt
- 18: Schleifplatte
- 19: Gehäuselängsachse
- 20: Abtriebseinheit
- 100: Absaugungsvorrichtung
- 118: Lufteinlass
- 119: Luftauslass
- 120: Befestigungsabschnitt
- 121: Innenseite
- 122: Kodierungsbereich
- 123: Vorsprung
- 200: Absaugungsvorrichtung
- 220: Befestigungsabschnitt
- 225: Hilfsring
- 226: radiale Öffnung
- 227: Radialvorsprung
- 228: Verriegelungskulisse
- 229: Ringschulter
- 300: Absaugungsvorrichtung
- 325: Hilfsring
- 330: Rastnase
- 331: Rastöffnung
- 400: Absaugungsvorrichtung
- 415: Verriegelungsvorrichtung
- 418: Lufteinlass
- 419: Luftauslass
- 420: Befestigungsabschnitt
- 421: Innenseite
- 422: Kodierungsbereich
- 423: Vorsprung
- 432: Grundkörper
- 433: Luftführungskanal
- 434: Rückstellfeder
- 435: Schwenkachse
- 500: Tiefenanschlag
- 515: Verriegelungsvorrichtung
- 520: Befestigungsabschnitt
- 522: Kodierungsbereich
- 523: Vorsprung

## Patentansprüche

1. Elektrohandwerkzeugmaschine (1), insbesondere eine oszillierend antreibbare Elektrohandwerkzeugmaschine (1), mit einem Gehäuse (2) und einem in dem Gehäuse (2) angeordneten Antrieb zum Antreiben einer Werkzeugaufnahme (3), die an einer mit dem Antrieb gekoppelten Werkzeugwelle angeordnet ist und an der ein Werkzeug (4) lösbar montierbar ist, wobei die Werkzeugwelle in einer Abtriebseinheit (20) aufgenommen ist, die einen vorzugsweise in einem Getriebekopfgehäuse (6) aufgenommenen Getriebekopf (5) umfasst, **dadurch gekennzeichnet, dass** an der Abtriebseinheit (20) ein Spannhals (7) ausgebildet ist, der derartig gestaltet ist, dass eine werkzeuglose Aufnahme eines Zubehörteils (8) in einer Montagerichtung ermöglicht ist, die parallel zu einer Längsachse (9) des Getriebekopfes (5) orientiert ist.

2. Elektrohandwerkzeugmaschine (1) nach Anspruch 1, **dadurch gekennzeichnet, dass** der Spannhals (7) dem Getriebekopf (5) oder dem Getriebekopfgehäuse (6) zugeordnet ist.

3. Elektrohandwerkzeugmaschine (1) nach Anspruch 1 oder 2, **dadurch gekennzeichnet, dass** der Spannhals (7) einstückig mit dem Getriebekopf (5) oder dem Getriebekopfgehäuse (6) ausgebildet ist, insbesondere einen zylindrischen Querschnitt aufweist und insbesondere an seinem der Werkzeugaufnahme (3) zuweisenden Ende durch einen Kragen (11) begrenzt ist.

4. Elektrohandwerkzeugmaschine (1) nach Anspruch 3, **dadurch gekennzeichnet, dass** an dem Kragen (11) mindestens eine Aussparung (12) zur Bildung einer Kodierung (13) ausgebildet ist, wobei der Winkelbereich der Summe der Aussparungen (12) bevorzugt zwischen 40° und 90° liegt und ganz besonders bevorzugt 60° beträgt.

5. Elektrohandwerkzeugmaschine (1) nach Anspruch 4, **dadurch gekennzeichnet, dass** die mindestens eine Aussparung (12) mehrfach vorgesehen ist.

6. Elektrohandwerkzeugmaschine (1) nach Anspruch 4 oder 5, **dadurch gekennzeichnet, dass** die Anzahl der Aussparungen (12) vorzugsweise 2 oder mehr, bevorzugt größer 4 oder mehr und besonders bevorzugt größer 6 oder mehr, und weiter vorzugsweise 14 oder weniger, bevorzugt 12 oder weniger und besonders bevorzugt 10 oder weniger, und ganz besonders bevorzugt 8 beträgt.

7. Elektrohandwerkzeugmaschine (1) nach einem der Ansprüche 4 bis 6, **dadurch gekennzeichnet, dass** die Kodierung (13) spiegelsymmetrisch zu einer Spiegelebene (16) verläuft, die durch eine Gehäuselängsachse des Gehäuses (2) und die Längsachse (9) des Getriebekopfes (5) aufgespannt wird.

8. Elektrohandwerkzeugmaschine (1) nach Anspruch 7, **dadurch gekennzeichnet, dass** mindestens eine der Aussparungen (12) von der Spiegelebene (16) geschnitten wird.

9. Elektrohandwerkzeugmaschine (1) nach einem der Ansprüche 4 bis 8, **dadurch gekennzeichnet, dass** die durch die mindestens eine Aussparung (12) gebildete Kodierung (13) so gestaltet ist, dass ein Aufsetzen eines Zubehörteils (8) nur in einer Position erfolgen kann, die üblicherweise nicht für den Einsatz des Zubehörteils (8) verwendet wird.

10. Elektrohandwerkzeugmaschine (1) nach einem der Ansprüche 1 bis 9, **dadurch gekennzeichnet, dass** das von der Werkzeugaufnahme (3) wegweisende Ende des Spannhalses (7) durch einen Ringbund (10) begrenzt ist.

11. Elektrohandwerkzeugmaschine (1) nach einem der Ansprüche 1 bis 10, **dadurch gekennzeichnet, dass** in dem Spannhals (7) Rastsitze (14) ausgebildet sind.

12. Elektrohandwerkzeugmaschine (1) nach einem der Ansprüche 1 bis 11, **dadurch gekennzeichnet, dass** dem Spannhals (7) ein Hilfsring (225, 325) frei drehbar und axial unverschiebbar zugeordnet ist, mit dem ein Zubehörteil (8) drehfest verbindbar ist und der insbesondere eine radiale Öffnung (226) aufweist.

13. Elektrohandwerkzeugmaschine (1) nach Anspruch 12, **dadurch gekennzeichnet, dass** dem Hilfsring (225, 325) an dessen der Werkzeugaufnahme (3) zuweisenden Ende mindestens ein Radialvorsprung (227) zugeordnet ist oder dass dem Hilfsring (325) mindestens eine Rastnase (330) zugeordnet ist und/oder dass dem Hilfsring (225, 325) an dessen der Werkzeugaufnahme (3) wegweisenden Ende eine Ringschulter (229) zugeordnet ist, die bevorzugt den Ringbund (10) zumindest teilweise überdeckt.

14. Kombination aus einer Elektrohandwerkzeugmaschine (1) nach einem der Ansprüche 1 bis 13 und einem Zubehörteil (8), das an dem Spannhals (7) des Getriebekopfgehäuses (6) lösbar aufgenommen ist, wobei das Zubehörteil (8) einen hohlzylindrischen Befestigungsabschnitt (120, 220, 320, 420, 520) aufweist, der mit dem Spannhals (7) koppelbar ist, wobei das Zubehörteil (8) vorzugsweise ausgewählt ist aus einer Gruppe, die eine Absaugungsvorrichtung (100, 200, 300, 400), einen Tiefenanschlag (500) und eine Tischhalterung umfasst.

15. Kombination nach Anspruch 14, **dadurch gekennzeichnet, dass** auf der Innenseite (121, 421, 521) des hohlzylindrischen Befestigungsabschnitts (120, 420, 520) eine Mehrzahl von Vorsprüngen (123, 423, 523) zur Wechselwirkung mit den Aussparungen (12) des Spannhalses (7), eine Mehrzahl von Verriegelungskulissen (228) zur Wechselwirkung mit den an dem Hilfsring (225) ausgebildeten Radialvorsprüngen (227), oder Rastöffnungen (331) zur Wechselwirkung mit den an dem Hilfsring (325) ausgebildeten Rastnasen (330) ausgebildet sind.
